# EUROPÄISCHE PATENTSCHRIFT

(11) **EP 0 538 236 B1**
(45) Veröffentlichungstag und Bekanntmachung des Hinweises auf die Patenterteilung: **22.11.1995**
(21) Anmeldenummer: 92890207.1
(22) Anmeldetag: 29.09.1992
(51) Int. Cl.: F15B 5/00, F16K 31/00, F15C 3/14

(54) **Piezo-Ventil**
Piezoelectric valve
Vanne piézo-électrique

(30) Priorität: 30.09.1991 AT 1962/91
(43) Veröffentlichungstag der Anmeldung: 21.04.1993
(73) Patentinhaber: HOERBIGER VENTILWERKE AKTIENGESELLSCHAFT, 1110 Wien (AT)
(72) Erfinder: Frisch, Herbert, A-1238 Wien (AT); Wirtl, Johannes, W-8920 Schongau (DE)
(74) Vertreter: Klein, Adam, Dipl.Ing.

(56) Entgegenhaltungen:
- EP-A- 0 046 431
- DE-A- 3 400 645
- DE-U- 8 607 094
- US-A- 3 437 102

## Beschreibung

Die Erfindung betrifft ein Piezo-Ventil mit einem zumindest einen Zulauf und Ablauf aufweisenden Gehäuse, in dem ein piezoelektrisches Biegeelement angeordnet ist, welches einen entsprechend einer angelegten Steuerspannung gegen eine elastisch aufgebrachte Gegenkraft beweglichen Dichtbereich aufweist, der in einer ersten Schaltstellung ohne Steuerspannung vom Sitz des Ablaufes abgehoben ist und in einer zweiten Schaltstellung unter Wirkung der Steuerspannung und unterstützt durch den Druck des abzusperrenden Mediums abdichtend auf diesem Sitz aufliegt.

Derartige Anordnungen sind beispielsweise aus der DE-A1 34 00 645, der EP-A1 191 011, der EP-A1 46 431, der DE-A1 25 11 752 oder auch der DE-U1 86 07 094.0 bekannt. In allen Fällen ist ein piezoelektrisches Biegeelement in einem Ventilgehäuse zwischen einem Zu- und einem Ablaufsitz bewegbar, wodurch der Mediumausgang entweder mit der Zulaufseite oder mit der Ablaufseite verbindbar ist. Es ist dabei notwendig, das Biegeelement in der den Ablaufsitz sperrenden Schaltstellung mit Spannung zu halten, was den Nachteil hat, daß insbesonders bei erhöhter Betriebstemperatur das piezoelektrische Biegeelement durch lange anliegende elektrische Spannung bleibend verformt wird, was auf die entsprechenden Eigenschaften der verwendeten Piezomaterialien zurückzuführen ist. Man muß daher stets danach trachten, die Schaltstellungen, bei denen das Biegeelement unter Spannung steht, zumindest bei von der Raumtemperatur abweichenden erhöhten Betriebstemperaturen relativ kurz zu halten, was den Anwendungsbereich derartiger Ventile bzw. Signalwandler nachteilig eingrenzt, da in allen Fällen sichergestellt sein muß, daß sich das Biegeelement nicht in der spannungsbeaufschlagten Zeit so stark bleibend verformt hat, daß ein Zurückschalten nach Wegnahme der Spannung nicht mehr erfolgt.

Aufgabe der vorliegenden Erfindung ist es, die genannten Nachteile der bekannten Anordnungen der eingangs genannten Art zu vermeiden und insbesonders ein derartiges Ventil so auszubilden, daß beide Schaltstellungen auch bei erhöhter Betriebstemperatur beliebig lange beibehalten werden können, ohne daß die Gefahr einer bleibenden Verformung des Biegeelementes mit der damit einhergehenden Behinderung der Funktion besteht.

Die genannte Aufgabe wird bei einem Piezo-Ventil der genannten Art gemäß der vorliegenden Erfindung dadurch gelöst, daß die abdichtbare Fläche des Sitzes des Ablaufes so groß ist, daß die entsprechend dem in der zweiten Schaltstellung wirkenden Mediumdruck auftretende druckbedingte Schließkraft des Dichtbereiches des Biegeelementes größer als die elastisch bedingte Gegenkraft und kleiner als die Summe dieser Gegenkraft und der beim Anlegen einer entsprechenden Steuerspannung wirkenden Piezo-Rückstellkraft ist. Damit wird die Abdichtung des steuerbaren Mediumanschlusses bei wirkendem Druck des abzusperrendem Mediums alleine durch dessen Wirkung auf den beweglichen Dichtbereich des Biegeelementes bewerkstelligt. Bei wirkendem Druck des abzusperrenden Mediums und durch das piezoelektrische Biegeelement nach kurzzeitiger Spannungsbeaufschlagung abdichtend geschlossenem Medium-Anschluß kann die Spannungsbeaufschlagung des piezoelektrischen Biegeelementes auf Null zurückgenommen werden, bzw. kann diese Spannungsbeaufschlagung zumindest weitestgehend zurückgenommen werden, auch wenn unter Umständen aus Sicherheitsgründen das Bedürfnis zur Aufrechthaltung einer gewissen definierten Spannungsbeaufschlagung des Biegeelementes besteht. Der Wegfall bzw. zumindest die drastische Verringerung der zum Halten des Dichtbereiches des piezoelektrischen Biegeelementes in der zweiten Schaltstellung erforderlichen Beaufschlagung kann die beschriebene Gefahr von bleibenden Verformungen des piezoelektrischen Biegeelementes auch bei erhöhten Betriebstemperaturen zumindest weitgehend verringern.

Zur Rückschaltung des piezoelektrischen Biegeelementes in die den Sitz des steuerbaren Medium-Anschlusses wieder freigebende erste Schaltstellung ist lediglich wiederum die kurzzeitige Anlegung eines entsprechenden, im Normalfall umgepolten Spannungsimpulses am piezoelektrischen Biegeelement erforderlich. In beiden Schaltstellungen ist also das Anlegen einer Spannung am piezoelektrischen Biegeelement im Normalfall überhaupt nur zum Umschalten in die jeweils andere Schaltstellung notwendig, womit nicht nur die Anspeisung, Isolierung und dergleichen des Biegeelementes vereinfacht sondern auch die angesprochenen Probleme mit bleibenden Verformungen des Biegeelementes bei erhöhten Betriebstemperaturen zuverlässig vermieden werden.

Gemäß einer besonders bevorzugten Ausgestaltung der Erfindung ist bei einem als 3/2-Wegeventil ausgebildeten Ventil, wobei im Gehäuse ein weiterer Medium-Ausgang vorgesehen ist, der Dichtbereich des Biegeelementes in der ersten Schaltstellung gegen den Sitz (12) des Zulaufes abdichtend elastisch vorgespannt und in der zweiten Schaltstellung vom Sitz (12) des Zulaufes abgehoben ist und abdichtend gegen den im wesentlichen gegenüber dem Sitz (12) des Zulaufes im Gehäuse angeordneten Sitz (13) des Ablaufes anliegt, vorgesehen, daß die vom Dichtbereich des Biegeelementes abdichtbare Fläche des Sitzes des Ablaufs größer ist als die entsprechende Fläche des Sitzes des Zulaufs. Damit kann unter Beibehaltung der oben genannten Bedingungen für ein bistabiles Schaltverhalten des Piezo-Ventils sichergestellt werden, daß der Sitz (12) des Zulaufes unter der Wirkung der elastischen Vorspannung des Dichtbereiches des Biegeelementes solange geschlossen bleibt, bis durch Anlegen eines Spannungsimpulses das Biegeelement unter Überwindung der elastischen Vorspannung vom Sitz (12) des Zulaufes abhebt und abdichtend gegen den im wesentlichen gegenüber angeordneten Sitz (13) des Ablaufes anliegt. Ab diesem dichten Anliegen am Sitz (13) des Ablaufes kann die Steuerspannung vom piezoelektrischen Biegeelement wieder weggenommen werden, welches sodann alleine unter Ausnutzung des vom abzusperrenden Mediums auf den Dichtbereich des Biegeelementes ausgeübten Druckes geschlossen bleibt.

Zum Rückschalten in die den Sitz (12) des Zulaufes absperrende Schaltstellung ist wiederum nur ein entsprechend umgekehrter Spannungsimpuls erforderlich, da nach dem Abheben des Dichtbereiches des Biegeelementes vom Sitz des Ablaufes die Druckunterstützung wegfällt und die Vorspannung des Biegeelementes den beweglichen Dichtbereich wieder in Richtung auf den abzusperrenden Sitz des Zulaufes bewegt.

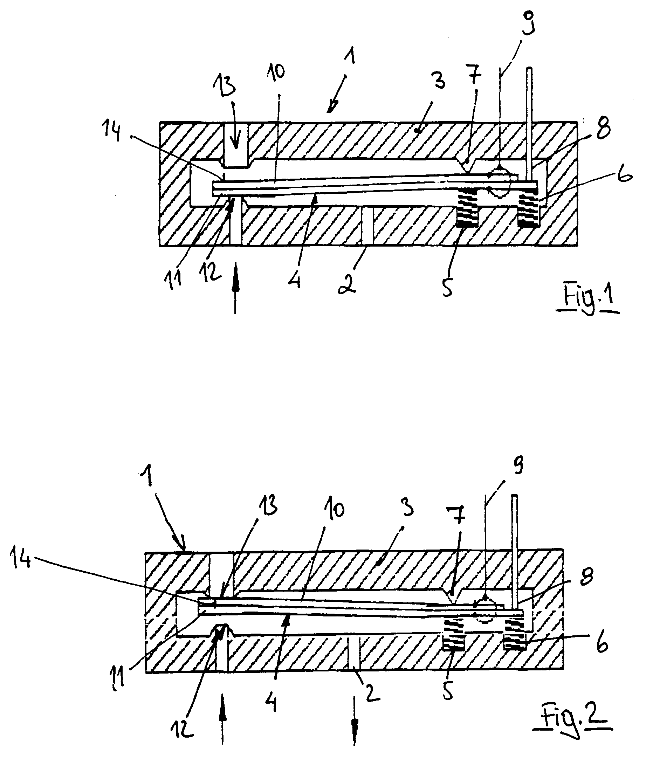

Die Erfindung wird im folgenden noch anhand des in der Zeichnung schematisch dargestellten Ausführungsbeispiels näher erläutert. Fig. 1 zeigt dabei ein erfindungsgemäßes Piezo-Ventil in einem elektro-pneumatischen Signalwandler in vergrößertem Schnitt und Fig. 2 zeigt den Signalwandler entsprechend Fig. 1 in seiner anderen Schaltstellung.

Der dargestellte elektro-pneumatische Signalwandler 1 besteht im wesentlichen aus einem einen Medium- bzw. Signalausgang 2 aufweisenden Gehäuse 3, in dem ein piezoelektrisches Biegeelement 4 angeordnet ist. Das Biegeelement 4 ist auf der in der Darstellung rechten Seite mittels Federn 5, 6 gegen eine schneidenartige Auflage 7 einerseits bzw. einen Anschlußkontakt 8 andererseits festgeklemmt, womit sich praktisch eine Festlegung des entsprechenden Endes des im wesentlichen streifenförmig ausgebildeten Biegeelementes 4 relativ zum Gehäuse 3 ergibt.

Über den Anschlußkontakt 8 und die Anschlußleitung 9 sind die jeweils gegenüberliegenden, elektrisch leitend beschichteten Oberflächen der beiden Schichten 10, 11 des sandwichartig zusammengesetzten Biegeelementes 4 mit einer hier nicht dargestellten Spannungsansteuerung verbunden, über welche eine zur mechanischen Auslenkung des Biegeelementes 4 dienende Spannung von geeigneter Größe, Dauer, Impulsform, Polarität, usw., angelegt werden kann.

In der in Fig. 1 dargestellten elektrisch spannungslosen Stellung des Biegeelementes 4 bzw. der Anschlüsse 8, 9 ist das Biegeelement 4 bzw. dessen in der Darstellung linkes Ende mit einem beweglichen Dichtbereich 14 gegen einen im Gehäuse 3 angeordneten Zulaufsitz 12 abdichtend vorgespannt, wobei der Signalausgang 2 mit einem Ablaufsitz 13 verbunden bleibt. Beim Anlegen einer entsprechenden elektrischen Spannung über den Anschlußkontakt 8 bzw. die Anschlußleitung 9 an das Biegeelement 4 schwenkt dieses entsprechend dem umgekehrten piezoelektrischen Effekt in die in Fig. 2 dargestellte Stellung um, wobei das Biegeelement 4 bzw. dessen linkes Ende mit dem Dichtbereich 14 vom Zulaufsitz 12 abhebt und sich abdichtend gegen den Ablaufsitz 13 legt.

Um zu erreichen, daß die beiden Schaltstellungen gemäß Fig. 1 bzw. Fig. 2 auch bei erhöhter Betriebstemperatur im Betrieb des Signalwandlers beliebig lange beibehalten werden können, ohne daß die Gefahr einer in den piezoelektrischen Eigenschaften der Schichten 10, 11 begründeten bleibenden Verformung des Biegeelementes 4 mit einer damit einhergehenden Behinderung der Funktion der Anordnung 1 besteht, ist einerseits der Ablaufsitz 13 mit einer größeren Durchströmöffnung als der Zulaufsitz 12 ausgeführt. Andererseits ist die abdichtbare Fläche des Ablaufsitzes 13 so groß, daß die entsprechend dem in der zweiten Schaltstellung wirkenden Zulaufdruck auftretende druckbedingte Schließkraft des Dichtbereiches 14 des Biegeelementes 4 größer als die elastisch bedingte Gegenkraft des Biegeelementes 4 und kleiner als die Summe dieser Gegenkraft und der beim Anlegen einer entsprechenden Steuerspannung wirkenden Piezo-Rückstellkraft ist.

Damit ergibt sich der Vorteil, daß zum Halten der in Fig. 2 dargestellten Schaltstellung bei wirkendem Zulaufdruck überhaupt keine Spannungsbeaufschlagung des Biegeelementes 4 mehr erforderlich ist, welches allein über die Wirkung des Zulaufdruckes gegen den Ablaufsitz 13 gedrückt bleibt. Erst nach entsprechender umgekehrter Spannungsbeaufschlagung des Biegeelementes 4 klappt dieses wieder in die in Fig. 1 dargestellte Stellung zurück, in der es aufgrund der mechanischen Vorspannung des Biegeelementes 4 auch ohne anliegende Spannung verbleibt.

Abgesehen von der konkret dargestellten Ausführung sind im Rahmen der Erfindung aber auch ohne weiteres Änderungen hinsichtlich der Ausbildung, Einspannung und Kontaktierung des Biegeelementes, sowie auch hinsichtlich der Ausbildung des Gehäuses und der Zuleitungen zum Zulaufsitz bzw. Ablaufsitz möglich - wesentlich ist nur, daß eine der Schaltstellungen durch entsprechende Ausbildung und Anordnung bzw. mechanische Vorspannung oder Vorbelastung des Biegeelementes 4 elektrisch spannungslos gehalten wird, während die andere Schaltstellung mit Unterstützung bzw. unter alleiniger Wirkung des abzusperrenden Medium- bzw. Zulaufdruckes, bei stark reduzierter bzw. wegfallender Spannung am Biegeelement, gehalten werden kann. Es ist dabei belanglos, um welche Art von Ventil bzw. Wandler oder dergleichen es sich handelt - neben dem dargestellten und besprochenen 3/2-Wegeventil kann natürlich auch jede andere geeignete Ventilform bzw. -ausbildung auf diese Weise piezoelektrisch gesteuert werden. So kann etwa bei einem erfindungsgemäß ausgebildeten Zwei-Wegeventil der Zulauf stets offen und der Ablauf entsprechend der genannten Ausbildung mit einem piezoelektrischen Biegeelement gesteuert werden. Dieses ist in seiner elektrisch spannungslosen Ruhestellung vom Ablaufsitz abgehoben, wobei aber der Zulaufsitz geöffnet bleibt. Beim Anlegen von Steuerspannung an das piezoelektrische Biegeelement erfolgt wieder die beschriebene Abdichtung des Ablaufsitzes.

## Patentansprüche

1. Piezo-Ventil mit einem zumindest einen Zulauf und Ablauf aufweisenden Gehäuse (3), in dem ein piezoelektrisches Biegeelement (4) angeordnet ist, welches einen entsprechend einer angelegten Steuerspannung gegen eine elastisch aufgebrachte Gegenkraft beweglichen Dichtbereich (14) aufweist, der in einer ersten Schaltstellung ohne Steuerspannung vom Sitz (13) des Ablaufes abgehoben ist und in einer zweiten Schaltstellung unter Wirkung der Steuerspannung und unterstützt durch den Druck des abzusperrenden Mediums abdichtend auf diesem Sitz (13) aufliegt, **dadurch gekennzeichnet,** daß die abdichtbare Fläche des Sitzes (13) des Ablaufes so groß ist, daß die entsprechend dem in der zweiten Schaltstellung wirkenden Mediumdruck auftretende druckbedingte Schließkraft des Dichtbereiches (14) des Biegeelementes (4) größer als die elastisch bedingte Gegenkraft und kleiner als die Summe dieser Gegenkraft und der beim Anlegen einer entsprechenden Steuerspannung wirkenden Piezo-Rückstellkraft ist.

2. Ventil nach Anspruch 1 ausgebildet als 3/2-Wegeventil, wobei im Gehäuse (3) ein weiterer Medium-Ausgang (2) vorgesehen ist, der Dichtbereich (14) des Biegeelementes (4) in der ersten Schaltstellung gegen den Sitz (12) des Zulaufes abdichtend elastisch vorgespannt und in der zweiten Schaltstellung vom Sitz (12) des Zulaufes abgehoben ist und abdichtend gegen den im wesentlichen gegenüber dem Sitz (12) des Zulaufes im Gehäuse (3) angeordneten Sitz (13) des Ablaufes anliegt **dadurch gekennzeichnet,** daß die vom Dichtbereich (14) des Biegeelementes (4) abdichtbare Fläche des Sitzes (13) des Ablaufs größer ist als die entsprechende Fläche des Sitzes (12) des Zulaufs.

## Claims

1. A piezoelectric valve comprising a housing (3) having at least one inlet and outlet, a piezoelectric flexural element (4) being arranged in the said housing (3) and having a sealing region (14) movable counter to a resiliently applied counterforce in accordance with an applied control voltage, the said sealing region (14) being lifted from the seat (13) of the outlet in a first switch position without a control voltage and, in a second switch position, resting on the said seat (13), so as to form a seal, under the effect of the control voltage and supported by the pressure of the medium to be shut off, characterised in that the size of the sealable surface of the seat (13) of the outlet is such that the pressure-actuated closing force of the sealing region (14) of the flexural element (4), corresponding to the medium pressure acting in the second switch position, is greater than the resiliently applied counterforce and smaller than the sum of this counterforce and the piezoelectric restoring force acting on application of a corresponding control voltage.

2. A valve according to claim 1, formed as a 3/2-way valve, wherein a further medium outlet (2) is provided in the housing (3), the sealing region (14) of the flexural element (4) is resiliently pretensed against the seat (12) of the inlet so as to form a seal in the first switch position and, in the second switch position, is lifted from the seat (12) of the inlet and rests, forming a seal, against the seat (13) of the outlet arranged in the housing (3) substantially opposite the seat (12) of the inlet, characterised in that the surface of the seat (13) of the outlet, sealable by the sealing region of the flexural element (4), is greater than the corresponding surface of the seat (12) of the inlet.

## Revendications

1. Vanne piézo avec un boîtier (3) présentant au moins une amenée et un écoulement, dans lequel, un élément de flexion (4) piézo-électrique est agencé, lequel présente une région d'étanchéité (14), mobile, de façon correspondante à une tension de commande appliquée, contre une force antagoniste produite élastiquement, cette région d'étanchéité (14), qui, dans une première position de commutation sans tension de commande, est soulevée du siège (13) de l'orifice d'écoulement, et, dans une deuxième position de commutation, sous l'effet de la tension de commande et soutenue par la pression du milieu à bloquer, repose en assurant l'étanchéité sur ce siège (13), caractérisée en ce que la face susceptible d'être rendue étanche du siège (13) de l'orifice d'écoulement est si grande, que la force de fermeture de la région d'étanchéité (14) de l'élément de flexion (4), causée par pression, survenant de façon correspondante à la pression du milieu agissant dans la deuxième position de commutation, est plus grande que la force antagoniste causée élastiquement et plus petite que la somme de cette force antagoniste et de la force de rappel en position piézo, agissant lors de l'application d'une tension de commande correspondante.

2. Vanne selon la revendication 1, constituée comme vanne à 3/2 voies, une autre sortie de milieu (2) étant prévue dans le boîtier (3), la région d'étanchéité (14) de l'élément de flexion (4), dans la première position de commutation, étant précontrainte élastiquement en formant étanchéité contre le siège (12) de l'orifice d'amenée, et, dans la deuxième position de commutation, étant soulevée du siège (12) de l'orifice d'amenée et adhérant en assurant l'étanchéité contre le siège (13) de l'orifice d'écoulement, agencé sensiblement à l'opposé du siège (12) de l'orifice d'amenée dans le boîtier (3), caractérisée en ce que la face du siège (13) de l'orifice d'écoulement, susceptible d'être rendu étanche par la région d'étanchéité (14) de l'élément de flexion (4), est plus grande que la face correspondante du siège (12) de l'orifice d'amenée.
